(19) Europäisches Patentamt
European Patent Office
Office européen des brevets

(11) Veröffentlichungsnummer: **0 007 573**
**B1**

(12) # EUROPÄISCHE PATENTSCHRIFT

(45) Veröffentlichungstag der Patentschrift: **23.12.81**

(51) Int. Cl.³: **A 01 N 47/36**, A 01 N 43/40

(21) Anmeldenummer: **79102530.7**

(22) Anmeldetag: **18.07.79**

(54) **Mittel und Verfahren zur selektiven Unkrautbekämpfung in Getreide.**

(30) Priorität: **20.07.78 CH 7837/78**

(43) Veröffentlichungstag der Anmeldung: **06.02.80 (Patentblatt 80/03)**

(45) Bekanntmachung des Hinweises auf die Patenterteilung: **23.12.81 Patentblatt 81/51**

(84) Benannte Vertragsstaaten: **AT BE CH DE FR GB IT NL**

(56) Entgegenhaltungen:
**FR - A - 2 288 089**
**US - A - 3 822 280**

(73) Patentinhaber: **CIBA-GEIGY AG**
**Patentabteilung Postfach**
**CH-4002 Basel (CH)**

(72) Erfinder: **Quadranti, Marco**
**Promenade 24**
**CH-5200 Brugg (CH)**
Erfinder: **Maurer, Willy**
**Schorenweg 40/3**
**CH-4058 Basel (CH)**
Erfinder: **Maag, Kurt**
**Unterwartweg 57**
**CH-4132 Muttenz (CH)**

(74) Vertreter: **Zumstein sen., Fritz, Dr. et al**
**Bräuhausstrasse 4**
**D-8000 München 2 (DE)**

**EP 0 007 573 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

Mittel und Verfahren zur selektiven Unkrautbekämpfung in Getreide

Vorliegende Erfindung betrifft ein neues herbizides Mittel mit unerwarteten herbiziden Eigenschaften, das sich hervorragend eignet zur post-emergenten selektiven Unkrautbekämpfung in Getreide wie Weizen, insbesondere zur Bekämpfung sowohl schwer bekämpfbarer monokotyler Ungräsern wie dicotyler Unkräuter, sowie ein Verfahren zur selektiven Bekämpfung von Unkraut in Getreidekulturen.

Herbizide Wirkstoffe aus der Reihe der Halogen-pyridyloxy-α-phenoxy-propion- (und propionthiol)-säurederivate, wie z.B. α-[4-(3',5'-Dichlorpyridyl-2'-oxy)-phenoxy]-propionsäure und deren Methylester sowie andere Ester der DOS 2 546 251, zeichnen sich bei Nachauflauf-Anwendung durch eine ausserordentlich starke Wirkung gegen wichtige in Getreide vorkommende Ungräser aus, beispielsweise gegen die folgenden hochschädlichen Gräser:

Avena fatua, Avena sterilis, Alopecurus myosuroides, Lolium perenne, Phalaris ssp., Bromus tectorum, Setaria ssp. usw. Die gute Wirkung tritt auch unter Freiland-(Feld-) Bedingungen bereits bei Aufwandmengen von 500 g Wirkstoff pro Hektar und weniger ein.

Leider können Substanzen dieses Typs trotz der hervorragenden Wirkung post-emergent nicht selektiv eingesetzt werden, da auch Getreidearten wie Weizen, Gerste und Reis zu stark mitgeschädigt werden.

Wie in der hängigen Europapatentanmeldung 79 100 035.9 der Anmelderin ausgeführt wird, kann man dieses Problem in gewissen Fällen, insbesondere im Falle des Weizens und der Gerste als Kulturpflanze lösen, wenn man anstelle der α-[4-(3',5'-Dichlorpyridyl-2'-oxy)-phenoxy]-propionsäure resp. des Methylesters oder anderer einfacher Ester der DOS 2 546 251 die in der erwähnten hängigen Patentanmeldung beschriebenen ungesättigten Propionsäure-resp. Propionthiolsäureester verwendet.

Bei starker Verunkrautung durch monokotyle Unkräuter ist es jedoch auch bei der Verwendung dieser ungesättigten Ester manchmal wünschbar, die Dosierungen, welche noch keine Phytotoxizität auf dem Getreide verursachen, zu überschreiten. In solchen Fällen können auch diese Verbindungen das Getreide schädigen.

Andererseits ist ein heterocyclisches Harnstoffderivat, nämlich N-(3-Trifluoromethyl-1,2,4-thiadiazolyl-5)-N'-methyl-N'-methoxy-harnstoff der Formel I

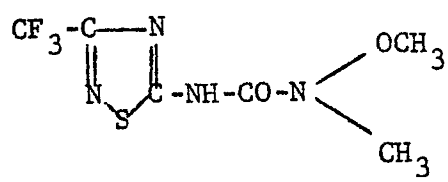 (I)

u.a. aus der Schweiz. Patentschrift No. 549 338 und der DOS 2 113 033 bekannt geworden, das im postemergenten Einsatz eine ausgezeichnete Wirkung gegen dikotyle Getreideunkräuter wie Galium ap., Veronica ssp., Viola tricolor, Polygonum ssp., Papaver rhoeas und andere Unkräuter zeigt. Seine gute Wirkung beschränkt sich aber auf dicotyle Unkräuter und gegen die vorher genannten Ungräser ist dieser Harnstoff nur wenig wirksam.

Es wurde nun völlig überraschend gefunden, dass eine erfindungsgemässe Misch-Kombination dieses heterocyclischen Harnstoffs I mit einem niederen gesättigten oder ungesättigten Ester einer halogenierten Pyridyloxy-α-phenoxy-propion-bzw. propionthiolsäure der Formel II

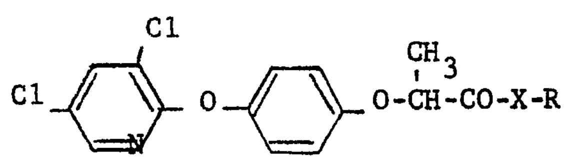 (II)

worin

X Sauerstoff oder Schwefel, und

R Wasserstoff, ein Kation, ein niederer Alkyl-, Alkenyl- oder Alkinylrest ist,

nicht bloss die erwartete additive Wirkung der Einzelkomponenten zeigt, sondern die Schadwirkung der Komponente der Formel II auf Getreide wie Weizen und Gerste, also die ursprüngliche Phytotoxizität des Pyridyloxyphenoxyderivates auf Getreide völlig aufhebt, die Harnstoffkomponente I die Schadwirkung der Komponente II auf z.B. Weizen also im Sinne eines « Safeners » antagonisiert. Die erfindungsgemässe Mischung zeigt aber keinen Wirkungsverlust gegenüber Ungräsern und dikotylen Unkräutern.

Die beiden Komponenten I und II addieren sich somit in der Wirkung zu einem breit wirksamen Herbizid bei gleichzeitiger Aufhebung der Phytotoxizität der Komponente II auf Weizen und andere Getreidearten. Dies eröffnet die Möglichkeit, diese Mischung beider Komponenten als Breitbandherbizid im Nachauflauf gegen die wichtigsten im Weizen und anderen Getreidearten vorkommenden mono- und

dikotylen Unkräuter einzusetzen.

Es lassen sich beispielsweise folgende Unkräuter in Winter-, Sommer- und Hartweizen sowie in Sommer- und Wintergerste gut bekämpfen :

Monokotyle : Avena fatua, Avena sterilis, Alopecurus myosuroides, Lolium perenne, Phalaris ssp., Bromus tectorum, Setaria ssp., Apera, Avena ludoviciana etc.

Dicotyle : Stellaria, Papaver, Matricaria, Sinapis, Galeopsis, Chrysanthemum, Veronica, Lamium, Polygonum, Capsella, Galium ap., Viola tricolor, Amaranthus, Chenopodium usw.

Ein bevorzugter Wirkstoff der Formel II ist α-[4-(3',5'-Dichlorpyridyl-2'-oxy)-phenoxy]-propionsäuremethylester der Formel IIa

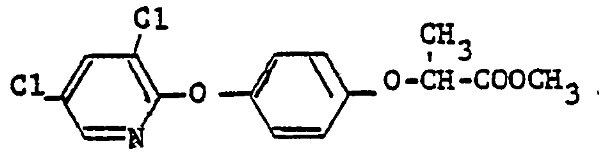

(IIa)

und zwar sowohl die racemische (±)-Form als auch seine optisch aktive R (+)-Form von erhöhter herbizider Wirkung.

Die optisch aktiveren Enantiomeren und ungesättigte Ester von Propion- und Propionthiolsäuren der Formel II bilden den Gegenstand schwebender Patentgesuche, soweit sie noch nicht aus DOS 2 546 251 und der japanischen Patentpublikation 1 142 537 bekannt geworden sind.

Das Mischungsverhältnis zwischen Komponente I und II im erfindungsgemässen Mittel ist nicht besonders kritisch und kann zwischen 1 : 10 und 10 : 1 schwanken. Bevorzugt sind Mischungen mit etwa gleichen Anteilen (1 : 1) der beiden Komponenten und solche, in denen eine Komponente leicht überwiegt. Vorzugsweise soll dann die Harnstoffkomponente I überwiegen, z.B. I : II = 3 : 2 oder 4 : 3, und sogar 4 : 1 bis 5 : 1.

Die Gesamtaufwandmenge beider Wirkstoffe zusammen beträgt vorzugsweise 0,25 bis 5 kg pro Hektar, doch soll der Harnstoffanteil I dann möglichst nicht mehr als 4 kg/ha ausmachen und der Anteil der Komponente II nicht mehr als 1 kg/ha betragen.

In einem solchen Konzentrationsbereich der Anwendung des erfindungsgemässen Mittels lässt sich praktisch keine Schadwirkung auf die Getreidekulturen feststellen, während Ungräser und Unkräuter schon bei niedrigen Konzentrationen praktisch total absterben.

Vorliegende Erfindung betrifft auch die Verwendung des erfindungsgemässen Mittels, also ein Verfahren zur selektiven Ungras- und Unkrautbekämpfung in Getreide unter post-emergenter Anwendung des Mittels.

Schon niedrige Aufwandmengen von 0,5 bis 1 kg/ha des Wirkstoffgemisches erzeugen bei den meisten Unkräutern und Ungräsern ein praktisch totales Absterben, während selbst bei hohen Aufwandmengen von 4 und 5 kg/ha nur unbedeutende Schädigung an den Kulturpflanzen Weizen und Gerste feststellbar ist, Verschiedene Typen des Problemunkrauts Avena fatua (Wildhafer) werden in allen praktischen Aufwandmengen-Bereichen vollkommen vernichtet.

Die neue Wirkstoffkombination erzielt auch dort noch einen hohen Wirksamkeitsgrad, wo die Einzelverbindungen im Bereich zu geringer Aufwandmenge wirkungslos werden. Dies hat eine wesentliche Verbreiterung des Unkrautspektrums und eine beträchtliche Erhöhung der Sicherheitsmarge auf Getreidekulturen zur Folge, wie sie für unbeabsichtigte Wirkstoff-Ueberdosierung notwendig und erwünscht ist.

Das erfindungsgemässe Mittel mit der neuen Wirkstoffkombination enthält neben den genannten Wirkstoffen noch geeignete Träger- und/oder andere Zuschlagstoffe. Diese können fest oder flüssig sein und entsprechen den in der Formulierungstechnik üblichen Stoffen wie z.B. natürlichen oder regenerierten mineralischen Stoffen, Lösungs-, Dispergier-, Netz-, Haft-, Verdickungs-, Bindemitteln oder auch Düngemitteln.

Der Wirkstoffgehalt in handelsfähigen Mitteln liegt zwischen 0,1 bis 95 Gewichtsprozent, vorzugsweise 1 bis 80 Gewichtsprozent.

Zur Applikation kann die Verbindungskombination in den folgenden flüssigen Aufarbeitungsformen vorliegen (wobei die Gewichts-Prozentangaben in Klammern vorteilhafte Mengen an Wirkstoff darstellen) :

a) in Wasser dispergierbare Wirkstoffkonzentrate : Spritzpulver (wettable powders) und Pasten (25-90 % in der Handelspackung, 0,01 bis 15 % in gebrauchsfertiger Lösung) ;

Emulsions- und Lösungskonzentrate (10 bis 50 % ; 0,01 bis 15 % in gebrauchsfertiger Lösung) ;

b) Lösungen (0,01 bis 20 %) ;

In Wasser dispergierbare Wirkstoffkonzentrate, d.h. Spritzpulver (wettable powder), Pasten und Emulsionskonzentrate stellen Mittel dar, die mit Wasser auf jede gewünschte Konzentration verdünnt werden können. Sie bestehen aus Wirkstoff, Trägerstoff, gegebenenfalls Wirkstoff-stabilisierenden Zusätzen, oberflächenaktiven Substanzen und Antischaummitteln und gegebenenfalls Lösungsmitteln.

Die Spritzpulver (wettable powder) und Pasten werden erhalten, indem man die Wirkstoffe mit Dispergiermitteln und pulverförmigen Trägerstoffen in geeigneten Vorrichtungen bis zur Homogenität

vermischt und vermahlt. Als Trägerstoffe kommen beispielsweise die vorstehend für die festen Aufarbeitungsformen erwähnten in Frage. In manchen Fällen ist es vorteilhaft, Mischungen verschiedener Trägerstoffe zu verwenden. Als Dispergatoren Können beispielsweise verwendet werden : Kondensationsprodukte von sulfoniertem Naphthalin und sulfonierten Naphthalinderivaten mit Formaldehyd, Kondensationsprodukte des Naphthalins bzw. von Naphthalinsulfonsäuren mit Phenol und Formaldehyd sowie Alkalimetall-, Ammonium- und Erdalkalimetallsalze von Ligninsulfonsäure, weiter Alkylarylsulfonate, Alkali- und Erdalkalimetallsalze der Dibutylnaphthalinsulfonsäure, Fettalkoholsulfate, wie Salze sulfatierter Hexadecanole, Heptadecanole und Salze von sulfatiertem Fettalkoholpolyäthylenglykoläther, das Natriumsalz von Oleylmethyltaurid, Dialkyldilaurylammoniumchlorid und fettsaure Alkali- und Erdalkalimetallsalze.

Als Antischaummittel kommen zum Beispiel Silicone in Frage.

Die Wirkstoffe werden mit den oben aufgeführten Zusätzen so vermischt, vermahlen, gesiebt und passiert, dass bei den Spritzpulvern der feste Anteil eine Korngrösse von 0,02 bis 0,04 und bei den Pasten von 0,03 mm in der Regel nicht überschreitet. Zur Herstellung von Emulsionskonzentraten und Pasten werden Dispergiermittel, wie sie in den vorangehenden Abschnitten aufgeführt wurden, organische Lösungsmittel und Wasser verwendet. Als Lösungsmittel kommen beispielsweise Alkohole, Xylole, Toluol, Dimethylsulfoxid, N,N-dialkylierte Amide un Trialkylamine in Frage. Die Lösungsmittel müssen praktisch geruchlos, nicht phytotoxisch, den Wirkstoffen gegenüber inert und nicht leicht brennbar sein.

Ferner können die erfindungsgemässen Mittel in Form von Lösungen angewendet werden. Hierzu werden die beiden Wirkstoffe I und II in geeigneten organischen Lösungsmitteln, Lösungsmittelgemischen, Wasser oder Gemischen von organischen Lösungsmitteln mit Wasser gelöst. Als organische Lösungsmittel können z.B. aliphatische und aromatische Kohlenwasserstoffe, deren chlorierte Derivate der Alkylnaphthaline verwendet werden.

Den beschriebenen erfindungsgemässen Mitteln lassen sich andere biozide Wirkstoffe oder Mittel beimischen, zum Beispiel Insektizide, Akarizide, Fungizide, Bakterizide, Wuchsregulatoren, Rodentizide oder Nematozide zur Verbreiterung des Wirkungsspektrums. Die erfindungsgemässen Mittel können ferner noch Pflanzendünger, Spurenelemente und andere den Nutzpflanzenanbau fördernde Begleitstoffe enthalten. Selbstverständlich sind auch Mittel möglich, welche neben der Komponente I mehrere Vertreter der Komponente II enthalten.

Die Wirkstoffe können beispielsweise wie folgt formuliert werden (Teile bedeuten Gewichtsteile) :

Spritzpulver

Zur Herstellung eines a) 70 %igen und b) 25 %igen Spritzpulvers werden folgende Bestandteile verwendet :

a) 42 Teile Harnstoff der Formel I,
28 Teile 4-[3',5'-Dichlorpyridyl-2'-oxy)-α-phenoxy]-propionsäure-methylester der Formel IIa,
5 Teile Natriumdibutylnaphthylsulfonat,
3 Teile Naphthalinsulfonsäuren-Phenolsulfonsäuren-Formaldehyd-Kondensat 3 : 2 : 1,
10 Teile Kaolin,
12 Teile Champagne-Kreide ;

b) 15 Teile Harnstoff der Formel I,
10 Teile 4-[3',5'-Dichlorpyridyl-2'-oxy)-α-phenoxy]-propionsäure-methylester der Formel IIa,
5 Teile Oleylmethyltaurid-Natrium-Salz,
2,5 Teile Naphthalinsulfonsäuren-Formaldehyd-Kondensat,
0,5 Teile Carboxymethylcellulose,
5 Teile neutrales Kalium-Aluminium-Silikat,
62 Teile Kaolin.

Die Wirkstoffe werden mit den Hilfsmitteln auf Kaolin bzw. Kreide aufgezogen und anschliessend vermischt und vermahlen. Man erhält Spritzpulver von vorzüglicher Benetzbarkeit und Schwebefähigkeit. Aus solchen Spritzpulvern können durch Verdünnen mit Wasser Suspensionen jeder gewünschten Wirkstoffkonzentration erhalten werden. Derartige Suspensionen lassen sich zur Bekämpfung von Unkräutern und Ungräsern in Getreidekulturen mit Nachauflaufverfahren verwenden.

Paste

Zur Herstellung einer 45 %igen Paste werden folgende Stoffe verwendet :

30 Teile Wirkstoff der Formel I
15 Teile eines Wirkstoffs der Formel II
5 Teile Natriumaluminiumsilikat,
14 Teile Cetylpolyäthylenglykoläther mit 8 Mol Aethylenoxid,

1 Teil Oleylpolyäthylenglykoläther mit 5 Mol Aethylenoxid,
2 Teile Spindelöl,
23 Teile Wasser,
10 Teile Polyäthylenglykol.

Die Wirkstoffe werden mit den Zuschlagstoffen in geeigneten Geräten homogenisiert und vermahlen. Man erhält eine Paste, aus der sich durch Verdünnen mit Wasser Suspensionen jeder gewünschten Konzentration herstellen lassen.

Emulsionskonzentrat

Zur Herstellung eines 25 %igen Emulsionskonzentrates werden

25 Teile Wirkstoffgemisch (2 : 1)
5 Teile Mischung von Nonylphenolpolyoxyäthylen und Calcium-dodecylbenzol-sulfonat,
35 Teile 3,5,5-Trimethyl-2-cyclohexen-1-on,
15 Teile Dimethylformamid,
20 Teile Xylol.

miteinander vermischt. Dieses Konzentrat kann mit Wasser zu Emulsionen auf geeignete Konzentrationen verdünnt werden.

Die erfindungsgemässe Wirkstoffkombination kann in einer der gebräuchlichen Formulierungen in üblicher Weise, z.B. durch Verstäuben, Versprühen, Verspritzen, Begiessen oder Verstreuen angewendet werden.

Die hervorragende Eignung der neuen Wirkstoffkombination zur selektiven Bekämpfung monokotyler und dikotyler Unkräuter in Weizen und Gerste unter gleichzeitiger Schonung dieser Kulturpflanzen geht aus den nachfolgend beschriebenen Versuchen hervor.

In einem stark mit Gräsern besetzten Weizen- oder Gerstenfeld auf normalem Ackerboden werden die Komponenten allein als auch in Mischung untereinander geprüft. Die Dosierungen und Mischungsverhältnisse sowie die Art der Kulturpflanzen und Unkräuter, Ort und Zeitpunkt der Behandlung und Auswertung der Versuche sind am Anfang der Tabellen angeführt.

Die Behandlung erfolgte im Nachauflauf. Die angewendete Brühmenge der verschiedenen Wirkstoffe und ihrer Mischungen von variabler Totalkonzentration betrug jeweils 500 Liter pro Hektar. Die zur Anwendung gelangenden Brühen werden aus Spritzpulvern (z.B. 80 %ige) oder aus Emulsionskonzentraten (z.B. 25 %ige) durch Verdünnen mit Wasser erhalten.

Die jeweils mit einer in bestimmter Weise zusammengesetzten Brühe behandelten Feldparzellen besassen die Fläche von jeweils 4 $m^2$.

Als Harnstoffkomponente diente N-(3-Trifluormethyl-1,2,4-thiadiazolyl-5)-N'-methoxy-N'-methylharnstoff der Formel I.

Als Pyridyloxy-phenoxy-propionsäurederivat diente 4-[3',5'-Dichlorpyridyl-2'-oxy]-α-phenoxy-propionsäuremethylester der Formel IIa.

Versuch No. 1

Versuchsgebiet : Sousay, Frankreich
Kulturpflanze : Winterweizen Sorte « Top »
Unkräuter : Avena fatua, Veronica hederifolia, Galium aparine
Behandlungszeitpunkt : Mitte März 1978, als der Weizen in der Mitte der Bestockung stand, Avena fatua im Anfang der Bestockung, Veronica und Galium im 3-4 Battrespektive 4-Rosetten-Stadium.
Auswertung des Versuches : 75 Tage nach der Behandlung.

Resultate :

| Produkt (kg/ha) | | | prözentuale Schädigung | | | |
|---|---|---|---|---|---|---|
| I | IIa | Total | Weizen | Avena fatua | Veron hed. | Galium ap. |
| 0,5 | — | | 0 | 0 | 0 | 90 |
| 0,75 | — | | 0 | 0 | 20 | 90 |
| 1,0 | — | | 0 | 0 | 30 | 90 |
| 1,25 | — | | 0 | 0 | 40 | 90 |
| 1,5 | — | | 0 | 0 | 50 | 95 |
| 1,75 | — | | 0 | 20 | 80 | 95 |
| — | 0,5 | | 40 | 100 | 0 | 0 |
| — | 0,75 | | 85 | 100 | 0 | 0 |

Resultate :

| Produkt (kg/ha) | | | prözentuale Schädigung | | | |
|---|---|---|---|---|---|---|
| I | IIa | Total | Weizen | Avena fatua | Veron hed. | Galium ap. |
| — | 1,0 | | 95 | 100 | 0 | 0 |
| — | 1,25 | | 95 | 100 | 0 | 0 |
| — | 1,5 | | 98 | 100 | 0 | 0 |
| — | 1,75 | | 100 | 100 | 0 | 0 |
| 0,5 | 0,5 | 1,0 | 0 | 98 | 75 | 88 |
| 0,75 | 0,5 | 1,25 | 0 | 98 | 88 | 90 |
| 1,0 | 0,5 | 1,5 | 0 | 98 | 90 | 90 |
| 0,75 | 0,75 | 1,5 | 0 | 99 | 90 | 90 |
| 1,0 | 0,75 | 1,75 | 0 | 100 | 92 | 92 |

Versuch No. 2

Versuchsgebiet : Kanton Genf, Schweiz

Kulturpflanze : Winterweizen Sorte « Zenith »

Unkraut : Avena fatua

Behandlungszeitpunkt : Anfangs April 1978, als Weizen und Avena fatua Anfangs bis Mitte Bestockung standen

Auswertung des Versuches : 35 Tage nach der Behandlung.

Resultate :

| Produkt (kg/ha) | | | prozentuala Schädigung | |
|---|---|---|---|---|
| I | IIa | Total | Weizen | Avena fatua |
| 0,5 | — | | 0 | 0 |
| 0,75 | — | | 0 | 0 |
| 1,0 | — | | 0 | 0 |
| 1,25 | — | | 0 | 5 |
| 1,5 | — | | 0 | 5 |
| 1,75 | — | | 0 | 5 |
| — | 0,5 | | 50 | 85 |
| — | 0,75 | | 65 | 96 |
| — | 1,0 | | 70 | 98 |
| — | 1,25 | | 75 | 98 |
| — | 1,5 | | 80 | 99 |
| — | 1,75 | | 85 | 99 |
| 0,5 | 0,5 | 1,0 | 5 | 80 |
| 0,75 | 0,5 | 1,25 | 5 | 85 |
| 1,0 | 0,5 | 1,5 | 10 | 95 |
| 0,75 | 0,75 | 1,5 | 10 | 95 |
| 1,0 | 0,75 | 1,75 | 10 | 95 |

Versuch No. 3

Versuchsgebiet : Lerida (Spanien)

Kulturpflanze : Winterweizen, Sorte « Capitole »

Unkräuter : Avena ludoviciana, Lolium rigidum, Papaver rh., Veronica hed.

Behandlungszeitpunkt : Ende Februar 1978, als der Weizen Anfangs bis Mitte Bestockung, Avena lud. Anfangs Bestockung, Lolium Anfangs bis Mitte Bestockung stand, Papaver im 8-9-Blatt-Stadium und Veronica im 4-Blatt-Stadium sich befanden.

Auswertung des Versuches : 53 Tage nach Behandlung.

Resultate :

| Produkt (kg/ha) | | | prozentuale Schädigung | | | | |
|---|---|---|---|---|---|---|---|
| I | IIa | Total | Weizen | Av. lud. | Lol. rig. | Papaver | Veronica |
| 0,5 | — | | 0 | 0 | 0 | 40 | 40 |
| 0,75 | — | | 0 | 10 | 10 | 100 | 70 |
| 1,0 | — | | 0 | 20 | 40 | 100 | 95 |
| 1,25 | — | | 0 | 30 | 40 | 100 | 95 |
| 1,5 | — | | 0 | 40 | 40 | 100 | 95 |
| 1,75 | — | | 0 | 40 | 70 | 100 | 100 |
| — | 0,5 | | 60 | 100 | 100 | 0 | 0 |
| — | 0,75 | | 60 | 100 | 100 | 0 | 0 |
| — | 1,0 | | 80 | 100 | 100 | 0 | 0 |
| — | 1,25 | | 80 | 100 | 100 | 0 | 0 |
| — | 0,5 | | 80 | 100 | 100 | 0 | 0 |
| — | 1,75 | | 80 | 100 | 100 | 0 | 0 |
| 0,5 | 0,5 | 1,0 | 7 | 100 | 100 | 95 | 95 |
| 0,75 | 0,5 | 1,25 | 0 | 100 | 100 | 92 | 92 |
| 1,0 | 0,5 | 1,5 | 2 | 98 | 100 | 100 | 95 |
| 0,75 | 0,75 | 1,5 | 4 | 100 | 100 | 100 | 98 |
| 1,0 | 0,75 | 1,75 | 12 | 100 | 100 | 100 | 98 |

Versuch No. 4

Versuchsgebiet : Möhlin (Kanton Aargau, Schweiz)
Kulturpflanze : Sommerweizen, Sorte « Tano »
Unkräuter : Avena ssp., Amaranthus retroflexus, Chenopodium album
Behandlungszeitpunkt : Mitte Juni 1978, als der Weizen und Avena anfangs Bestockung standen und die dicotylen Unkräuter einige Blätter ausgebildet hatten.
Auswertung des Versuches : 26 Tage nach Behandlung

Resultate :

| Produkt (kg/ha) | | | prozentuale Schädigung | | | |
|---|---|---|---|---|---|---|
| I | IIa | Total | Weizen | Avena ssp. | Amar. ret. | Chenop. alb. |
| 0,5 | — | | 0 | 0 | 100 | 100 |
| 0,75 | — | | 0 | 0 | 100 | 100 |
| 1,5 | — | | 0 | 0 | 100 | 100 |
| — | 0,25 | | 95 | 100 | 100 | 100 |
| — | 0,5 | | 98 | 100 | 100 | 100 |
| — | 0,75 | | 100 | 100 | 100 | 100 |
| — | 1,5 | | 100 | 100 | 100 | 100 |
| 0,5 | 0,25 | 0,75 (2 : 1) | 20 | 100 | 100 | 100 |
| 1,25 | 0,25 | 1,5 (5 : 1) | 15 | 100 | 100 | 100 |

Versuch No. 5

Anstelle der Halogenpyridyloxy-phenoxy-propionsäurekomponente der Formel IIa wurde in diesem Versuch α-[4-(3′,5′-Dichlor-pyridyl-2′-oxy)]-phenoxy-propionthiolsäure-propargylester der Formel IIb

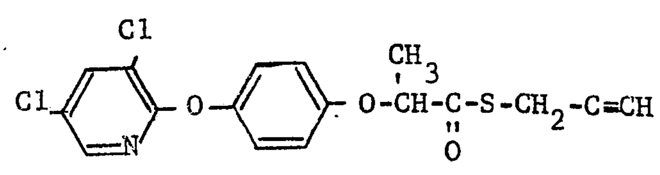

(IIb)

verwendet.

Versuchsgebiet : Blansingen (Westdeutschland)

Kulturpflanze : Sommergerste Sorte « Carina »

Unkräuter : Avena fatua und Alopecurus

Behandlungszeitpunkt : Ende Mai 1978, als sich Gerste und Alopecurus am Ende der Bestockung mit Beginn der Schossen-Bildung befanden.

Auswertung des Versuches : 44 Tage nach Behandlung.

Resultate :

| Produkt (kg/ha) | | | prozentuale Schädigung | | |
|---|---|---|---|---|---|
| I | IIb | Total | Gerste | Avena fatua | Alopecurus |
| 0,5 | — | | 0 | 0 | 0 |
| 0,75 | — | | 0 | 0 | 0 |
| 1,0 | — | | 0 | 0 | 0 |
| 1,25 | — | | 5 | 0 | 0 |
| 1,5 | — | | 20 | 0 | 10 |
| — | 0,25 | | 20 | 55 | 90 |
| — | 0,5 | | 35 | 90 | 90 |
| — | 0,75 | | 80 | 99 | 95 |
| — | 1,0 | | 97 | 100 | 100 |
| — | 1,25 | | 97 | 100 | 100 |
| — | 1,5 | | 99 | 100 | 100 |
| 0,5 | 0,25 | 0,75 (2 : 1) | 0 | 30 | 30 |
| 0,75 | 0,25 | 1,0 (3 : 1) | 5 | 98 | 90 |
| 1,0 | 0,25 | 1,25 (4 : 1) | 10 | 99 | 95 |
| 0,5 | 0,5 | 1,0 (1 : 1) | 10 | 100 | 98 |
| 0,75 | 0,5 | 1,25 (3 : 2) | 15 | 100 | 98 |
| 1,0 | 0,5 | 1,5 (2 : 1) | 20 | 100 | 98 |

Es zeigt sich bei oben beschriebenen Versuchen deutlich, dass bei der Mischung die Phytotoxizität auf Weizen und Gerste bedeutend niedriger liegt als wenn das Monocotyledonen-Mittel IIa oder IIb in der Menge des Mischungsanteils allein zur Anwendung kommt, ohne dass dabei ein Wirkungsverlust bei den Ungräsern und Unkräutern auftritt.

Aehnliche Effekte sind auch zwischen Harnstoffkomponente I und anderen Wirkstoffen der Formel II beobachtet worden.

Als weitere Wirkstoffe der Formel II kommen in erster Linie in Betracht :

Die der Verbindung IIa entsprechende freie Säure und ihre Salze, sowie der Aethyl-, die Propyl- und Butyl-, der Allyl-, Methallyl- und Propargylester dieser Säure sowie dieselben Salze und Ester der entsprechenden Propionthiolsäure, worin in der Formel II X ein Schwefelatom ist.

**Ansprüche**

1. Herbizides Mittel zur selektiven Unkrautbekämpfung in Getreide, dadurch gekennzeichnet, dass es neben Träger- und/oder anderen Zuschlagstoffen als wirksame Komponente einerseits N-(3-Trifluormethyl-1,2,4-thiadiazolyl-5)-N'-methyl-N'-methoxy-harnstoff (I) und andererseits ein Halogenpyridyloxy-phenoxy-propionsäurederivat der Formel II

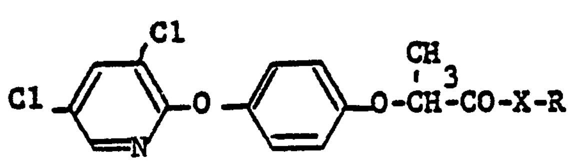

(II)

enthält, worin

X Sauerstoff oder Schwefel, und

R Wasserstoff, ein Kation, ein niederer Alkyl-, Alkenyl- oder Alkinylrest ist.

2. Mittel gemäss Patentanspruch 1, dadurch gekennzeichnet, dass es als aktive Komponente der Formel II den 4-[3',5'-Dichlorpyridyl-2'-oxy]-α-phenoxy-propionsäure-methylester der Formel

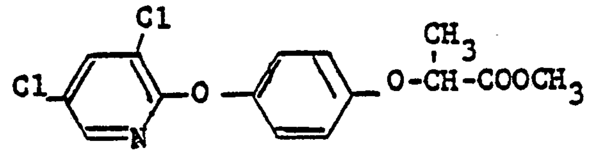

(IIa)

enthält.

3. Mittel gemäss Patentanspruch 1, dadurch gekennzeichnet, dass die Harnstoffkomponente I zu gleichen Teilen oder in einem Ueberschuss von höchstens 5 : 1 in Bezug auf die Komponente der Formel II im Gemisch vorhanden ist.

4. Verfahren zur selektiven Ungras- und Unkrautbekämpfung in Getreidekulturen wie Weizen, Gerste, Reis etc., dadurch gekennzeichnet, dass man verunkrautete Getreidekulturen post-emergent mit einer wirksamen Menge des Mittels gemäss Patentanspruch 1 behandelt.

5. Verfahren gemäss Patentanspruch 4, zur Behandlung von Getreide-, insbesondere Weizenkulturen, die durch Ungräser der Gattung Wildhafer (avena fatua und verwandte Arten) und/oder Alopecurus verunkrautet sind.

6. Verfahren gemäss Patentansprüchen 4 und 5, dadurch gekennzeichnet, dass man die Getreidekulturen mit Aufwandmengen des Mittels behandelt, die 0,25 bis 5 kg Totalwirkstoffe pro Hektar entsprechen.

**Claims**

1. A herbicidal composition for the selective control of weeds in cereals, which composition comprises two active components, one of which is N-(3-trifluoromethyl-1,2,4-thiadiazolyl-5)-N'-methyl-N'-methoxy urea (I) and the other is a halopyridyloxyphenoxypropionic acid derivative of the formula II

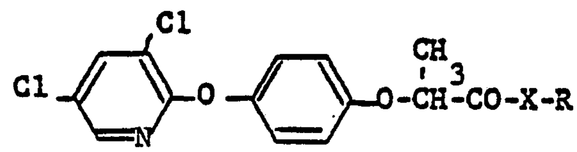

(II)

wherein

X is oxygen or sulfur and

R is hydrogen, a cation, a lower alkyl, alkenyl or alkynyl radical, together with carriers and/or other adjuvants.

2. A composition according to claim 1, which contains, as active component of the formula II, 4-[3',5'-dichloropyridyl-2'-oxy]-α-phenoxypropionic acid methyl ester of the formula

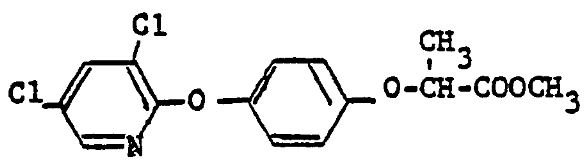

(IIa)

3. A composition according to claim 1, wherein the ratio of urea component I to the component of the formula II is from 1 : 1 to at most 5 : 1.

4. A method of selectively controlling grasses and weeds in cereal crops such as wheat, barley and rice post-emergence, which comprises treating weed-infested cereal crops with an effective amount of the composition according to claim 1.

5. A method according to claim 4, wherein the cereal crops to be treated are in particular wheat crops which are infested with weeds of the genus wild oat (Avena fatua and related species) and/or Alopecurus.

6. A method according to either of claims 4 or 5, wherein the cereal crops are treated with the composition at rates of application corresponding to 0.25 to 5 kg of the total amount of active substances per hectare.

**Revendications**

1. Agent herbicide pour lutter de façon sélective contre les mauvaises herbes dans les céréales, caractérisé en ce qu'il contient outre des supports et/ou autres additifs, comme composant actif, d'une part la N-(3-Trifluorométhyl-1,2,4-thiadiazolyl-5)-N'-méthyl-N'-méthoxy-urée et d'autre part un dérivé

d'acide halogènepyridyloxy-phénoxy-propionique de formule II

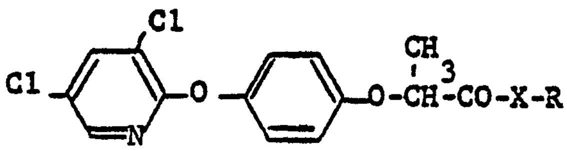

(II)

où

X représente un oxygène ou un soufre, et

R un hydrogène, un cation, un radical alcoyle, alcényle ou alcynyle inférieur.

2. Agent selon la revendication 1, caractérisé en ce qu'il contient comme composant actif de formule II l'ester méthylique de l'acide 4-[3',5'-Dichloropyridyl-2'-oxy]-alpha-phénoxy-propionique de formule

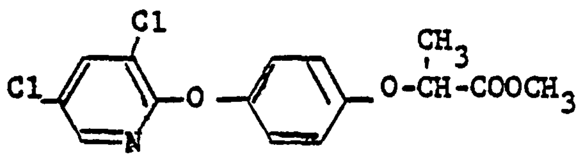

(IIa)

3. Agent selon la revendication 1, caractérisé en ce que le composant urée I est présent en quantités égales ou en un excès d'au plus 5 : 1 par rapport au composant de formule II dans le mélange.

4. Procédé de lutte sélective contre les graminées indésirables et les mauvaises herbes dans les cultures de céréales comme le blé, l'orge, le riz, etc, caractérisé en ce qu'on traite des cultures de céréales envahies par des mauvaises herbes en post-levée avec une quantité efficace de l'agent selon la revendication 1.

5. Procédé selon la revendication 4 de traitement des cultures de céréales, en particulier de blé, qui sont envahies par des graminées indésirables du genre folle avoine (Avena fatua et espèces apparentées) et/ou Alopecurus. .

6. Procédé selon les revendications 4 et 5, caractérisé en ce qu'on traite les cultures de céréales avec des quantités de l'agent qui correspondent à 0,25 à 5 kg de matières actives totale/ha.